# EUROPEAN PATENT SPECIFICATION

(11) **EP 3 492 523 B1**
(45) Date of publication and mention of the grant of the patent: **08.09.2021**
(21) Application number: 17834571.6
(22) Date of filing: 28.07.2017
(51) Int. Cl.: C08L 23/02, C08J 3/20, C08L 23/26, C08L 25/04, C08L 77/00, C08L 23/12

(54) **THERMOPLASTIC RESIN COMPOSITION, METHOD FOR PRODUCING SAME, AND MOLDED BODY**
WÄRMEHÄRTENDE HARZZUSAMMENSETZUNG, VERFAHREN ZUR HERSTELLUNG DAVON UND FORMKÖRPER
COMPOSITION DE RÉSINE THERMOPLASTIQUE, PROCÉDÉ POUR SA PRODUCTION ET CORPS MOULÉ

(30) Priority: 28.07.2016 JP 2016148951
(43) Date of publication of application: 05.06.2019
(73) Proprietor: Toyota Boshoku Kabushiki Kaisha, Kariya-shi, Aichi 448-8651 (JP)
(72) Inventor: KATO Keisuke, Kariya-shi Aichi 448-8651 (JP)
(74) Representative: TBK
(86) International application number: PCT/JP2017/027564
(87) International publication number: WO 2018/021569

(56) References cited:
- EP-A1- 2 796 497
- EP-A1- 3 572 465
- EP-A1- 3 575 346
- JP-A- 2013 147 645
- JP-A- 2013 147 647
- JP-A- 2013 227 423
- US-A- 5 342 886

## Description

### TECHNICAL FIELD

The present invention relates to a thermoplastic resin composition, a method for producing the same, and a molded body. More particularly, the present invention relates to a thermoplastic resin composition that exert excellent impact resistance, a method for producing the same, and a molded body.

### BACKGROUND ART

Attempts have been made to obtain resin compositions (polymer blends, polymer alloys) that exert synergistic properties exceeding the material resins by mixing raw material resins having different properties. For example, it is known that in the case of selecting a polyolefin resin and a polyamide resin that are poor in compatibility as raw material resins and mixing them to yield a resin composition of a multiphase structure (continuous phase, dispersed phase, etc.), a resin composition having impact resistance exceeding each raw material resin may be obtained in some cases. Such a technology is disclosed in Patent Documents 1 to 3 below.

### CITATIONS LIST

### PATENT LITERATURE

Patent Literature 1: JP 2013-147647 A
Patent Literature 2: JP 2013-147646 A
Patent Literature 3: JP 2013-147645 A

### SUMMARY OF INVENTION

### TECHNICAL PROBLEMS

Patent Document 1 discloses a thermoplastic resin composition obtained by compounding a polyolefin resin, a polyamide resin and a compatibilizer, and having a phase separation structure in which a continuous phase, a dispersed phase, and a fine dispersed phase further dispersed in the dispersed phase are present. It is shown that this thermoplastic resin composition exerts excellent impact resistance. In particular, Patent Document 1 discloses that the maximum value of Charpy impact strength at the time when PA11 is used as the polyamide resin is an extremely excellent value of 72.9 kJ/m².

On the other hand, it is shown that the Charpy impact strength at the time when each of PA12, PA6, PA610, PA1010, PAMXD6 and PA10T is used as the polyamide resin remains at 1.0 to 8.6 kJ/m².

Patent Document 2 discloses that when PA11, PA610, PA614, PA1010, and/or PA10T are/is employed as the polyamide resin and an acid-modified olefin-based thermoplastic elastomer is employed as the compatibilizer, a thermoplastic resin composition obtained by melt-blending the polyolefin resin, the polyamide resin, and the compatibilizer can exhibit excellent impact resistance. In particular, Patent Document 2 discloses that the maximum value of Charpy impact strength is extremely excellent value of 86.2 kJ/m² when PA11 is used as the polyamide resin and acid-modified EBR is used as the compatibilizer.

On the other hand, it is shown that the maximum value of Charpy impact strength is 40.0 kJ/m² when PA610 or PA1010 is used as a polyamide resin.

Patent Document 3 shows that a thermoplastic resin composition in which a mixed resin formed by melt-kneading a polyamide resin and a compatibilizer and a polyolefin resin are melt-kneaded exhibits excellent impact resistance. In particular, it is disclosed that the maximum value of Charpy impact strength is extremely excellent value of 86.3 kJ/m² when PA11 is used as the polyamide resin.

On the other hand, it is shown that the maximum value of Charpy impact strength is 40.0 kJ/m² when PA610 or PA1010 is used as a polyamide resin, and the maximum value of Charpy impact strength is 56.0 kJ/m² when PAMXD6 is used as a polyamide resin. In addition, it is shown that the maximum value of Charpy impact strength remains at 16.6 kJ/m² when PA6 is used as the polyamide resin

Thus, it is found from Patent Documents 1 to 3 that although excellent impact resistance can be obtained when any polyamide resin is used and PA11 exhibits extremely excellent impact resistance, compared with that, the effect of improving the impact resistance like PA11 is not obtained when the polyamide resin such as PA6 is used.

The present invention has been made in view of the above-mentioned conventional circumstances, and it is an object of the present invention to provide a thermoplastic resin composition capable of having excellent impact resistance comparable to the case of using PA11 even with the case of using polyamide resin having a short chain structure in which a carbon number of a linear-chain part between amide bonds is 5 or less in a thermoplastic resin composition containing a polyolefin resin, a polyamide resin and a modified elastomer, a method for producing the same, and a molded body.

### SOLUTIONS TO PROBLEMS

As described above, the present inventor has noted that it is difficult to obtain the effect of improving impact resistance in PA6 contrary to the fact that PA11 has an extremely excellent effect of improving impact resistance among polyamide resins. Then, the present inventor noted that PA11 has a carbon number of a linear-chain part of hydrocarbon group sandwiched between adjacent amide bonds in a main chain is as large as 10, whereas in PA6, the carbon number is as small as 5. Then, it is thought that by having a short chain structure having a small number of carbon atoms between amide bonds as in PA6, the number of amide bonds contained in the polyamide molecule increases, the hydrogen bonding force acting between the molecules increases, and this is a cause of a phenomenon that the dispersion diameter of the dispersed phase in the continuous phase cannot be reduced during melt kneading. It is considered that in such a case, the impact resistance can be improved by reducing the interfaces between the molecules of the polyolefin resin, that is, by increasing a molecular weight of the polyolefin resin, and this have now led to completion of the present invention.

That is, in order to solve the above problem, the present invention is as follows.

A thermoplastic resin composition according to claim 1 (hereinafter also simply referred to as "inventive composition") contains a polyolefin resin, a polyamide resin, and a modified elastomer having a group reactive with the polyamide resin,
wherein the polyolefin resin has a number average molecular weight of 350,000 or more, and
the polyamide resin has a structure in which a carbon number of a linear-chain part of hydrocarbon group sandwiched between adjacent amide bonds in a main chain is 5 or less.

The thermoplastic resin composition includes:
a continuous phase (A) containing the polyolefin resin, and
a dispersed phase (B) dispersed in the continuous phase (A) and containing the polyamide resin and the modified elastomer.

A thermoplastic resin composition according to claim 2 is the thermoplastic resin composition according to claim 1, wherein the dispersed phase (B) has a continuous phase (B₁₁) containing the polyamide resin, and a fine dispersed phase (B₁₂) dispersed in the continuous phase (B₁₁) and containing the modified elastomer.

A thermoplastic resin composition according to claim 3 is the thermoplastic resin composition according to claim 1 or 2, wherein the polyolefin resin is a homopolymer.

A thermoplastic resin composition according to claim 4 is the thermoplastic resin composition according to any one of claims 1 to 3, wherein the polyamide resin is selected from the group consisting of nylon 6, nylon 66, nylon 46, nylon 6T, nylon 61, nylon M5T, nylon M5I, and copolymers thereof.

A thermoplastic resin composition according to claim 5 is the thermoplastic resin composition according to any one of claims 1 to 4, wherein the modified elastomer is an olefin-based thermoplastic elastomer having a skeleton of a copolymer of ethylene or propylene and an α-olefin having 3 to 8 carbon atoms, or a styrene-based thermoplastic elastomer having a styrene skeleton.

A molded body according to claim 6 is composed of the thermoplastic resin composition according to any one of claims 1 to 5.

A method for producing a thermoplastic resin composition according to claim 7 is a method for producing the thermoplastic resin composition according to claim 1, the method comprising:
a melt-kneading step of melt-kneading a melt-kneaded product of the polyamide resin and the modified elastomer with the polyolefin resin.

### ADVANTAGEOUS EFFECTS OF INVENTION

According to the thermoplastic resin composition (the inventive composition) of the present invention, in the thermoplastic resin composition containing the polyolefin resin, the polyamide resin, and the modified elastomer, even when using polyamide resin having a short chain structure in which a carbon number of a linear-chain part between amide bonds is 5 or less, a thermoplastic resin composition can be a thermoplastic resin composition having excellent impact resistance comparable to the case of using PA11. That is, a thermoplastic resin composition having extremely excellent impact resistance can be obtained by using a polyamide resin having small carbon number of a linear-chain part between amide bonds and high versatility.

According to the molded body of the present invention, in a molded body composed of a thermoplastic resin composition containing a polyolefin resin, a polyamide resin, and a modified elastomer, even when using polyamide resin having a short chain structure in which a carbon number of a linear-chain part between amide bonds is 5 or less, the molded body can be a molded body having excellent impact resistance comparable to the case of using PA11. That is, a molded body having extremely excellent impact resistance can be obtained by using a polyamide resin having small carbon number of a linear-chain part between amide bonds and high versatility.

According to the method for producing a thermoplastic resin composition of the present invention, the above-mentioned thermoplastic resin composition can be obtained.

### BRIEF DESCRIPTION OF DRAWINGS

The present invention will be further described in the following detailed description with reference to the following figures, given non-limiting examples of exemplary embodiments according to the invention, and like reference symbols represent identical parts through several figures.
FIG. 1 is a schematic view for explaining an example of a phase structure of the present thermoplastic resin composition.
FIG. 2 is a schematic view for explaining another example of the phase structure of the present thermoplastic resin composition.
FIG. 3 is a graph showing a correlation between a number average molecular weight and a Charpy impact strength of the polyolefin resin.

### DESCRIPTION OF EMBODIMENTS

Subjects shown herein are illustrative one and one for describing embodiments of the present invention exemplarily, and are described for providing one believed to be explanation in which the principles and conceptual characteristics of the invention can be understood most effectively and without any difficulty. In this point, the embodiments are necessary for fundamental comprehension of the present invention and how some embodiments of the present invention are embodied in practice is clearly shown to those skilled in the art by an explanation in connection with drawings without intending to indicate a structural detail of the present invention above a certain level.

### [1] Thermoplastic Resin Composition

The inventive composition contains a polyolefin resin, a polyamide resin, and a modified elastomer having a group reactive with the polyamide resin. Among them, the number average molecular weight of the polyolefin resin is 350000 or more. Further, the polyamide resin has a structure in which a carbon number of a linear-chain part of hydrocarbon group sandwiched between adjacent amide bonds in a main chain is 5 or less.

The inventive composition may be formed by compounding a polyolefin resin, a polyamide resin, and a modified elastomer having a group reactive with the polyamide resin. Among them, the number average molecular weight of the polyolefin resin is 350000 or more. Further, the polyamide resin has a structure in which a carbon number of a linear-chain part of hydrocarbon group sandwiched between adjacent amide bonds in a main chain is 5 or less.

### <1> Each Component

### (1) Polyolefin Resin

The polyolefin resin is a homopolymer of olefin (homopolymer) and/or a copolymer of olefin (copolymer).

The olefin constituting the polyolefin resin is not particularly limited, and examples thereof include ethylene, propylene, 1-butene, 3-methyl-1-butene, 1-pentene, 3-methyl-1-pentene, 4-methyl-1-pentene, 1-hexene, 1-octene, and the like. These may be used singly, or may be used in combination of two or more thereof.

That is, examples of the polyolefin resin include a polyethylene resin, a polypropylene resin, poly(1-butene), poly(1-hexene), poly(4-methyl- 1-pentene), and the like. These polymers may be used singly, or may be used in combination of two or more thereof. That is, the polyolefin resin may be a mixture of the above polymers.

Examples of the polyethylene resin include an ethylene homopolymer and a copolymer of ethylene and another olefin. Examples of the latter include an ethylene-1-butene copolymer, an ethylene-1-hexene copolymer, an ethylene-1-octene copolymer, an ethylenene-4-methyl-1-pentene copolymer, and the like (50% or more of the total number of constituent units is a unit derived from ethylene).

Examples of the polypropylene resin include a propylene homopolymer and a copolymer of propylene and another olefin.

On the other hand, examples of the other olefin constituting the copolymer with propylene include the above-mentioned various types of olefins (excluding propylene). Of these, ethylene and 1-butene are preferred. That is, a propylene-ethylene copolymer and a propylene-1-butene copolymer are preferred.

Further, the copolymer of propylene and another olefin may be a random copolymer or a block copolymer.

In addition, in the copolymer of propylene and another olefin, 50% or more of the total number of constituent units is a unit derived from propylene.

In the present thermoplastic resin composition, the polyolefin resin preferably contains a homopolymer, and more preferably contains a homopolymer as a main component (usually 70 mass% or more and may be 100 mass% with respect to the whole). That is, the polyolefin resin is preferably a homopolymer using, as a monomer, one type among olefins such as ethylene, propylene, 1-butene, 3-methyl-1-butene, 1-pentene, 3-methyl-1-pentene, 4-methyl-1-pentene, 1-hexene, 1-octene, and the like, or a mixture thereof. Among these, propylene homopolymer is particularly preferably contained, and furthermore, a propylene homopolymer is preferably contained as a main component (usually 70 mass% or more and may be 100 mass% with respect to the whole).

In the case where the polyolefin resin contains a homopolymer as a main component and a propylene homopolymer as a main component, examples of the homopolymer other than the propylene homopolymer include an ethylene homopolymer and/or 1-butene homopolymer and the like.

The polyolefin resin is a polyolefin having no affinity for the polyamide resin and is a polyolefin having no reactive group capable of reacting with the polyamide resin. In this respect, the polyolefin resin is different from the modified elastomer.

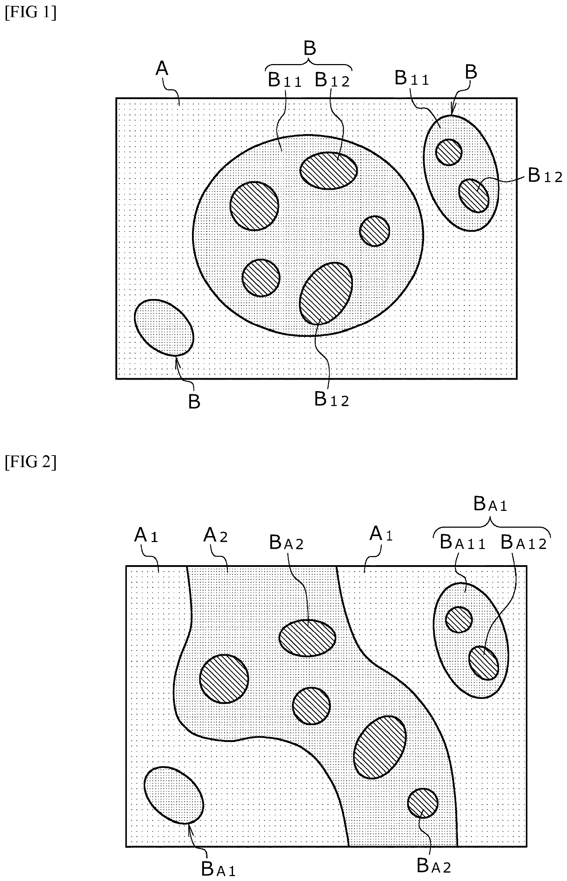

In the present thermoplastic resin composition, the number average molecular weight of the polyolefin resin is 350000 or more. When the number average molecular weight of the polyolefin resin is 350000 or more, it is possible to reduce the interface between the polyolefin molecules. Therefore, it is considered that the impact resistance can be remarkably improved even when the dispersion diameter of the dispersed phase (for example, the dispersed phase B in FIG. 1 and the dispersed phase B_{A1} in FIG. 2) remains relatively large. On the other hand, this effect is not exerted in a polyamide resin having large carbon number of a linear-chain part between amide bonds such as PA11, and is exerted specifically only in a polyamide resin having small carbon number of a linear-chain part between amide bonds.

In the present thermoplastic resin composition, the above number average molecular weight may be 350000 or more, and the upper limit of the number average molecular weight is not limited, but may be, for example, 700000 or less. The number average molecular weight is preferably 370000 or more, more preferably 400000 or more, still more preferably 430000 or more, even more preferably 450000 or more, particularly preferably 470000 or more, particularly preferably 490000 or more, particularly preferably 500000 or more.

The number average molecular weight of the polyolefin resin is the number average molecular weight on the polystyrene equivalent basis by gel permeation chromatography (GPC). In the present invention, when a homopolymer is used as the polyolefin resin, each numerical range of the above number average molecular weight can be read as a numerical range of the weight average molecular weight.

In the present thermoplastic resin composition, the MFR (melt flow rate) of the polyolefin resin is not particularly limited. Usually, the molecular weight (including the number average molecular weight) of the polyolefin resin and the MFR are proportional to each other. The MFR of the polyolefin resin of the present thermoplastic resin composition is preferably 25 g/10 min or less. The lower limit of MFR is not limited, and it can be set to 1 g/10 min or more, for example. The MFR is preferably 22 g/10 min or less, more preferably 19 g/10 min or less, more preferably 16 g/10 min or less, even more preferably 13 g/10 min or less, particularly preferably 10 g/10 min or less, particularly preferably 9 g/10 min or less, and particularly preferably 8 g/10 min or less.

The MFR of the polyolefin resin is measured under the conditions of a temperature of 230°C and a load of 21.18 N (2.16 kgf) according to JIS K 7210

### (2) Polyamide Resin

The polyamide resin is a polymer having a chain skeleton formed by polymerizing a plurality of monomers with an amide bond (-NH-CO-) interposed therebetween.

In the present thermoplastic resin composition, the polyamide resin has a structure in which a carbon number of a linear-chain part of hydrocarbon group sandwiched between adjacent amide bonds in a main chain is 5 or less (in the present invention, simply referred to as "short chain structure"). That is, a polyamide molecule constituting the polyamide resin has a short chain structure.

That is, for example, the following structures (1) to (6) are exemplified as the structure in which the above-mentioned carbon number of a linear-chain part is 5.
(1) -NHCO-CH₂-CH₂-CH₂-CH₂-CH₂-NHCO-
(2) -CONH-CH₂-CH₂-CH₂-CH₂-CH₂-NHCO-
(3) -NHOC-CH₂-CH₂-CH₂-CH₂-CH₂-CONH-
(4) -NHCO-CH₂-CH₂-CH₂-CH₂(CH₃)-CH₂-NHCO-
(5) -CONH-CH₂-CH₂-CH₂-CH₂(CH₃)-CH₂-NHCO-
(6) -NHOC-CH₂-CH₂-CH₂-CH₂(CH₃)-CH₂-CONH-

Examples of the above-mentioned structure having a carbon number of a linear-chain part of 4 include the following (7) to (12).
(7) -NHCO-CH₂-CH₂-CH₂-CH₂-NHCO-
(8) -CONH-CH₂-CH₂-CH₂-CH₂-NHCO-
(9) -NHOC-CH₂-CH₂-CH₂-CH₂-CONH-
(10) -NHCO-CH₂-CH₂-CH₂(CH₃)-CH₂-NHCO-
(11) -CONH-CH₂-CH₂-CH₂(CH₃)-CH₂-NHCO-
(12) -NHOC-CH₂-CH₂-CH₂(CH₃)-CH₂-CONH-

In the present thermoplastic resin composition, as the polyamide resin, a polyamide resin having only a short chain structure can be used. Specific examples of polyamide resin having only a short chain structure include nylon 6 (PA6, polyamide 6), nylon 66 (PA66, polyamide 66), nylon 46 (PA46, polyamide 46), and copolymers thereof. These may be used singly, or may be used in combination of two or more thereof.

Examples of the above-mentioned copolymers include nylon 6/66 (PA6/66, nylon 6/66) and the like. These may be used singly, or may be used in combination of two or more thereof.

Further, the polyamide resin in the present thermoplastic resin composition may have, at the same time in addition to the short chain structure, a structure in which the hydrocarbon group sandwiched between adjacent amide bonds in the main chain is a phenylene group or a substituent thereof (hereinafter simply referred to as "phenylene structure"). The phenylene group (-C₆H₄-) is a residue obtained by eliminating two hydrogen atoms from benzene (C₆H₆), and may be any of a 1,2-phenylene group, a 1,3-phenylene group, and a 1,4-phenylene group. These may be used singly, or may be used in combination of two or more thereof. In addition, in the substituent (-C₆H₃(R)-) of the phenylene group, the carbon number of the main chains of the hydrocarbon groups sandwiched between adjacent amide bonds in the main chain is usually 6 or more and 10 or less. That is, examples of the substituted phenylene group include a methylene phenylene group, a dimethylene phenylene group, an ethylene phenylene group, and the like. These may be used singly, or may be used in combination of two or more thereof.

That is, as the polyamide resin in the present thermoplastic resin composition, a polyamide resin having only a short chain structure and a phenylene structure can be used.

Specific examples of polyamide resin having only a short chain structure and a phenylene structure include nylon 6T (PA6T, polyamide 6T), nylon 61 (PA6I, polyamide 61), nylon M5T (PAM5T, polyamide M5T), nylon M5I (PAM5I, polyamide M5I), and copolymers thereof. These may be used singly, or may be used in combination of two or more thereof.

Examples of the above-mentioned copolymer include nylon 6T/66 (PA6T/66, nylon 6T/66), nylon 6T/6I (PA6T/6I, polyamide 6T/6I), nylon 6T/6I/66 (PA6T/6I/66, polyamide 6T/6I/66), nylon 6T/2M-5T (PA6T/2M-5T, polyamide 6T/2M-5T) and the like. These may be used singly, or may be used in combination of two or more thereof.

Further, as the polyamide resin in the present thermoplastic resin composition, polyamide resin can be used which contains a structure having the above-mentioned carbon number of a linear-chain part of more than 5 (simply referred to as "long chain structure" in the present invention) at the same time in addition to the short chain structure described above. That is, it is possible to use a polyamide resin in which the polyamide molecule has only a structure of both a short chain structure and a long chain structure. Examples of polyamide resin having only the structure of both the short chain structure and the long chain structure include nylon 610 (PA610, polyamide 610), nylon 611 (PA611, polyamide 611), nylon 612 (PA612, polyamide 612), polyamide 614 (PA614, polyamide 614), polyamide MXD 6 (PAMXD6, polyamide MXD 6), and the like. These polyamides may be used singly, or may be used in combination of two or more thereof.

In addition, in the case of using the polyamide resin having only the structure of both the short chain structure and the long chain structure in the present thermoplastic resin composition, the polyamide resin preferably contains short chain structure of an amount of more than 50% (more preferably 60% or more and 99% or less) with respect to the total of the short chain structure and the long chain structure.

The number average molecular weight of the polyamide resin in the present thermoplastic resin composition is not limited, and it can be, for example, 5000 or more and 100000 or less, preferably 7500 or more and 50000 or less, and more preferably 10000 or more and 50000 or less.

The number average molecular weight of the polyamide resin is the number average molecular weight on the polystyrene equivalent basis by gel permeation chromatography (GPC).

In the present invention, by using a polyolefin resin having a large molecular weight (specifically, a number average molecular weight of 350000 or more), even in the case of using the polyamide resin having a short chain structure as described above, higher impact resistance can be obtained, and in particular, in a polyamide resin containing more of this short chain structure, it is possible to achieve the effect of improving impact resistance more strongly.

That is, for example, when a thermoplastic resin composition using a polyolefin resin having a number average molecular weight of 200000 to 300000 (non-high molecular weight PO) and a thermoplastic resin composition using a polyolefin resin having a number average molecular weight of 350000 or more (high molecular weight PO) are compared with each other, the difference in impact strength appears more greatly when a polyamide resin containing more short chain structure is employed as the polyamide resin.

Therefore, when a polyamide resin having substantially only a short chain structure is used as the polyamide resin, the effect of the present invention can be more strongly achieved. That is, an extremely high effect of improving impact resistance can be achieved.

When a polyamide resin having both a short chain structure and a phenylene structure, or a polyamide resin having both a short chain structure and a long chain structure is used as the polyamide resin, the effect of the present invention can be more strongly achieved in the case where an polyamide resin having a large ratio of the short chain structure is used.

Specifically, with respect to the sum of all structures (sum of units) of a short chain structure (that is, can be described as a short chain unit), a phenylene structure (that is, can be described as a phenylene unit), and a long chain structure (that is, can be described as a long chain unit), the ratio (number ratio) of the short chain structure is preferably more than 50%, and more preferably 70% or more and 99% or less.

As will be described later, the present thermoplastic resin composition can be obtained, for example, by melt-kneading a melt-kneaded product of a polyamide resin and a modified elastomer with a polyolefin resin. In such a thermoplastic resin composition, when comparing the case where PA11 is selected as the polyamide resin and the case where PA6 is selected as the polyamide resin, it can be seen that the dispersion diameter (average dispersion diameter) of the dispersed phase (for example, the dispersed phase B in FIG. 1 and the dispersed phase B_{A1} in FIG. 2) is smaller when PA11 is selected and larger when PA6 is selected. As the reason for the occurrence of the difference in dispersion diameter, the inventors of the present invention thought that the difference in the magnitude between the contributions of hydrogen bonds of amide bonds (attractive interactions between hydrogen atoms constituting one amide bond and oxygen atoms constituting other amide bonds) was considered to be correlated. That is, in the polyamide resin having a short chain structure, an amount of the amide bond of a polyamide molecule is relatively large, and the hydrogen bonds acting between the polyamide molecules become strong as compared with the PA11 in which a carbon number of a linear-chain part of hydrocarbon group sandwiched between adjacent amide bonds in a main chain is all 10. Therefore, it was considered that when kneading and melting the melt-kneaded product of the polyamide resin and the modified elastomer with the polyolefin resin, it is difficult to separate the polyamide molecules from each other, so that the dispersion diameter of the dispersed phase to be dispersed in the continuous phase cannot be reduced sufficiently (that is, for example, in the case where the dispersion diameter of the dispersed phase B (polyamide resin and modified elastomer) to be dispersed in the continuous phase A (polyolefin resin) in FIG. 1 cannot be made sufficiently small, or in the case where the dispersion diameter of the dispersed phase B_{A1} (polyamide resin and modified elastomer) to be dispersed in the continuous phase A₁ (polyolefin resin) in FIG. 2 cannot be made sufficiently small). Therefore, it was considered that the thermoplastic resin composition, in which the dispersion diameter of the dispersed phase cannot be reduced, is hard to achieve effect of improving the impact resistance as compared with the thermoplastic resin composition capable of reducing the dispersion diameter. On the other hand, it was found that even with a thermoplastic resin composition which has a short chain structure and therefore is difficult to reduce the dispersion diameter of the dispersed phase, by controlling the number average molecular weight of the polyolefin resin to be compounded to 350000 or more, it is possible to reduce formation of interface between the polyolefin molecules, and as a result, it is possible to obtain a dramatically superior impact resistance compared with conventional impact resistance even in a thermoplastic resin composition having a dispersed phase having a relatively large dispersion diameter.

The monomer constituting the polyamide resin in the present thermoplastic resin composition is not particularly limited, and monomers capable of appropriately forming the above-mentioned short chain structure, phenylene structure, long chain structure, and the like as required can be used.

Specific examples of monomer include amino acids such as 6-aminocaproic acid, 11-aminoundecanoic acid, 12-aminododecanoic acid, and paraaminomethylbenzoic acid, lactams such as ε-caprolactam, undecane lactam, and ω-lauryl lactam. These may be used singly, or may be used in combination of two or more thereof.

Furthermore, the polyamide resin can also be obtained by copolymerization of a diamine and a dicarboxylic acid. In this case, examples of diamines as monomers include aliphatic diamines such as ethylenediamine, 1,3-diaminopropane, 1,4-diaminobutane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1, 16-diaminohexadecane, 1,17-diaminoheptadecane, 1,18-diaminooctadecane, 1,19-diaminononadecane, 1,20-diamino eicosane, 2-methyl-1,5-diaminopentane, and 2-methyl 1,8-diammooctane; alicyclic diamines such as cyclohexanediamine and bis-(4-aminocyclohexyl)methane; and aromatic diamines such as xylylenediamine (p-phenylenediamine, m-phenylenediamine, etc.). These may be used singly, or may be used in combination of two or more thereof.

Further, examples of the dicarboxylic acid as a monomer include aliphatic dicarboxylic acids such as oxalic acid, malonic acid, succinic acid, glutaric acid, adipic acid, pimelic acid, suberic acid, azelaic acid, sebacic acid, undecanedioic acid, dodecanedioic acid, brasylic acid, tetradecanedioic acid, pentadecanoic acid, and octadecanedioic acid; alicyclic dicarboxylic acids such as cyclohexane dicarboxylic acid; and aromatic dicarboxylic acids such as phthalic acid, terephthalic acid, isophthalic acid, and naphthalene dicarboxylic acid. These may be used singly, or may be used in combination of two or more thereof.

### (3) Modified Elastomer

The modified elastomer is an elastomer having a group reactive with the polyamide resin. The modified elastomer is preferably an elastomer further exhibiting affinity for the polyamide resin by utilizing the reactive group as described above and simultaneously exhibiting an affinity for the polyolefin resin. That is, the modified elastomer is preferably a compatibilizer having a group reactive with the polyamide resin and having compatibility with both the polyolefin resin and the polyamide resin.

In addition, the modified elastomer may be contained as an unreacted modified elastomer in the present thermoplastic resin composition, as a reactant with a polyamide resin, or may be contained in both of these forms.

Examples of the reactive group include an acid anhydride group (-CO-O-OC-), a carboxyl group (-COOH), an epoxy group {-C₂O (a three-membered ring structure composed of two carbon atoms and one oxygen atom)}, an oxazoline group (-C₃H₄NO), an isocyanate group (-NCO), and the like. These may be used singly, or may be used in combination of two or more thereof.

These reactive groups can be introduced by modification to an elastomer before modification (unmodified elastomer). Specific examples thereof include an acid-modified elastomer, an epoxy-modified elastomer, and an oxazoline-modified elastomer. Among these, acid-modified products of elastomers are preferred, and modified products of elastomers with acid anhydrides or carboxylic acids are more preferred.

It is particularly preferred that the modified elastomer has an acid anhydride group or a carboxyl group at the side chain or terminal of the molecule. An amount of the acid modification amount is not particularly limited and, for example, the number of acid anhydride groups or carboxyl groups contained in one molecule of the modified elastomer is preferably 1 or more, more preferably 2 or more and 50 or less, still more preferably 3 or more and 30 or less, and particularly preferably 5 or more and 20 or less.

The above-mentioned modified elastomers can be used singly or in combination of two or more.

Examples of the elastomer before modification include an olefinic elastomer and a styrene elastomer. From the viewpoint of compatibility with a polyolefin resin, an olefinic elastomer is particularly preferable.

The olefinic elastomer is preferably an α-olefin copolymer containing a structural unit derived from an α-olefin having 3 to 8 carbon atoms, and an ethylene-α-olefin copolymer, an α-olefin copolymer, an α-olefin-nonconjugated diene copolymer, and an ethylene-α-olefin-nonconjugated diene copolymer may be used. Of these, an ethylene-α-olefin copolymer, an α-olefin copolymer, and an ethylene-α-olefin-nonconjugated diene copolymer are particularly preferable.

Examples of the non-conjugated diene include linear non-cyclic diene compounds such as 1,4-pentadiene, 1,4-hexadiene, 1,5-hexadiene and 1,6-hexadiene; branched chain noncyclic diene compounds such as 5-methyl-1,4-hexadiene, 3,7-dimethyl-1,6-octadiene, 5,7-dimethylocta-1,6-diene, 3,7-dimethyl- 1,7-octadiene, 7-methyl octa-1,6-diene and dihydromyrcene; and alicyclic diene compounds such as tetrahydroindene, methyltetrahydroindene, dicyclopentadiene, bicyclo[2.2.1]hepta-2,5-diene, 5-methylene-2-norbornene, 5-ethylidene-2-norbornene, 5-propenyl-2-norbornene, 5-isopropylidene-2-norbornene, 5-cyclohexylidene-2-norbornene and 5-vinyl-2-norbornene, and the like.

Specific examples of the olefin elastomer include an ethylene-propylene copolymer, an ethylene-1-butene copolymer, an ethylene-1-pentene copolymer, an ethylene-1-hexene copolymer, an ethylene-1-octene copolymer, a propylene-1-butene copolymer, a propylene-1-pentene copolymer, a propylene-1-hexene copolymer, a propylene-1-octene copolymer, and the like. Of these copolymers, an ethylene-propylene copolymer, an ethylene-1-butene copolymer and an ethylene-1-octene copolymer are preferred.

Examples of the styrene elastomer include a block copolymer of an aromatic vinyl compound and a conjugated diene compound and a hydrogenated product thereof.

Examples of the aromatic vinyl compound include alkylstyrenes such as styrene, α-methylstyrene, p-methylstyrene, and p-tert-butylstyrene; p-methoxysteyme, vinylnaphthalene, and the like.

Examples of the conjugated diene compound include butadiene, isoprene, 1,3-pentadiene, methylpentadiene, phenylbutadiene, 3,4-dimethyl- 1,3-hexadiene, 4,5- diethyl-1,3-octadiene, and the like.

Specific examples of styrene elastomer include styrene-butadiene-styrene copolymer (SBS), styrene-isoprene-styrene copolymer (SIS), styrene-ethylene/butylene-styrene copolymer (SEBS), styrene-ethylene/propylene-styrene copolymer (SEPS), and the like.

Examples of the acid anhydride for acid modification include maleic anhydride, phthalic anhydride, itaconic anhydride, succinic anhydride, glutaric anhydride, adipic anhydride, citraconic anhydride, tetrahydrophthalic anhydride, butenyl succinic anhydride, and the like. Of these, maleic anhydride, phthalic anhydride, and itaconic anhydride are preferred.

Examples of the carboxylic acid include acrylic acid, methacrylic acid, maleic acid, fumaric acid, itaconic acid, citraconic acid, and the like.

Among the above-mentioned various modified elastomers, the modified elastomer in the present thermoplastic resin composition is preferably an acid anhydride-modified elastomer, particularly preferably a maleic anhydride-modified elastomer, and furthermore preferably an acid-modified product of an α-olefin copolymer containing a structural unit derived from α-olefin having 3 to 8 carbon atoms. Specifically, the elastomers modified with maleic anhydride are preferred, such as maleic anhydride-modified ethylene-propylene copolymer, maleic anhydride-modified ethylene-1-butene copolymer, maleic anhydride-modified ethylene-1-hexene copolymer, and maleic anhydride-modified ethylene-1-octene copolymer. Specifically, α-olefin copolymer "TAFMER series" (trade name) manufactured by Mitsui Chemicals, Inc., "AMPLIFY series" (trade name) manufactured by Dow Chemical Company, etc. can be used.

The weight average molecular weight of the modified elastomer in the present thermoplastic resin composition is not particularly limited; however, it may be, for example, 10000 or more and 500000 or less, preferably 20000 or more and 500000 or less, and more preferably 30000 or more and 300000 or less.

The weight average molecular weight of the modified elastomer is a weight average molecular weight on the polystyrene equivalent basis by gel permeation chromatography (GPC).

### (4) Other Components

The present thermoplastic resin composition does not contain thermoplastic resins other than the above-mentioned polyolefin resin (having a number average molecular weight of 350000 or more), a polyamide resin (having a short chain structure), and a modified elastomer, and it may consist of only the above-mentioned thermoplastic resin as a thermoplastic resin; however, in addition to these, it may contain other components. These may be used singly, or may be used in combination of two or more thereof.

As other components, another thermoplastic resin can be mentioned. Specific examples of another thermoplastic resin include polyester resins (polybutylene terephthalate, polyethylene terephthalate, polycarbonate, polybutylene succinate, polyethylene succinate, polylactic acid) , polyolefin resins having a number average molecular weight of less than 350000 (particularly 150000 to 300000 inclusive). These may be used singly, or may be used in combination of two or more thereof.

In the case where another thermoplastic resin is contained, when the total amount of the above-mentioned polyolefin resin having a number average molecular weight of 350000 or more, polyamide resin having a short chain structure, modified elastomer and another thermoplastic resin is 100 mass%, it is preferred that the amount of another thermoplastic resin is 25 mass% or less (further 20 mass% or less, further 15 mass% or less, further 10 mass% or less, further 5 mass% or less and 1 mass% or more). In addition, the polyolefin resin having a number average molecular weight of less than 350000 may be either a homopolymer or a copolymer, or both of them.

Examples of additives that can be compounded include nucleating agents, antioxidants, heat stabilizers, weathering agents, light stabilizers, plasticizers, ultraviolet absorbers, antistatic agents, flame retardants, slip agents, antiblocking agents, anti-fogging agent, lubricant, pigment, dye, dispersant, copper inhibitor, neutralizer, foam inhibitor, weld strength improver, natural oil, synthetic oil, wax and the like. These may be used singly, or may be used in combination of two or more thereof.

### <2> Phase Structure

The present thermoplastic resin composition may be one containing a polyolefin resin, a polyamide resin and a modified elastomer, in which the number average molecular weight of the polyolefin resin is 350000 or more, and the polyamide resin has a short chain structure, and a phase structure of the short chain is not limited. Examples of the phase structure that the thermoplastic resin composition can take include the following phase structures (1) to (3).

### Phase Structure of (1)

A phase structure has a continuous phase (A) containing the polyolefin resin; and a dispersed phase (B) dispersed in the continuous phase (A) and containing the polyamide resin and the modified elastomer. The dispersed phase (B) has a continuous phase (B₁₁) being a continuous phase in the dispersed phase (B) and containing a polyamide resin; and a fine dispersed phase (B₁₂) dispersed in the continuous phase (B₁₁) and containing the modified elastomer (refer to FIG. 1).

That is, the phase structure of (1) exhibits a multiple-phase structure further having a fine dispersed phase (B₁₁) in the dispersed phase (B).

The phase structure of (1) is a phase structure having no continuous phase other than the continuous phase (A). Further, in the phase structure of (1), the modified elastomer may be an unreacted modified elastomer, a reaction product with a polyamide resin, or a mixture thereof.

In the present specification, the above-mentioned "phase structure of (1)" is also simply referred to as "phase structure (1)".

### Phase Structure of (2)

A phase structure has a continuous phase (A₁) containing the polyolefin resin; and a dispersed phase (B_{A1}) dispersed in the continuous phase (A₁) and containing the polyamide resin and the modified elastomer, and further has continuous phase (A₂) containing the polyamide resin; and a dispersed phase (B_{A2}) dispersed in the continuous phase (A₂) and containing the modified elastomer (refer to FIG. 2). That is, the phase structure of (2) exhibits a co-continuous phase structure in which two continuous phases of a continuous phase (A₁) and a continuous phase (A₂) coexist.

Among these, the dispersed phase (B_{A1}) may have a continuous phase (B_{A11}) being a continuous phase in the dispersed phase (B_{A1}) and containing the polyamide resin; and a fine dispersed phase (B_{A12}) dispersed in the continuous phase (B_{A11}) and containing a modified elastomer. In this case, the phase structure of (2) has a multiple-phase structure further having a fine dispersed phase (B_{A12}) in the dispersed phase (B_{A1}).

The phase structure of (2) is a phase structure having no continuous phase other than the continuous phase (A₁) and the continuous phase (A₂). Further, in the phase structure of (2), the modified elastomer may be an unreacted modified elastomer, a reaction product with a polyamide resin, or a mixture thereof.

In the present specification, the above "phase structure of (2)" is also simply referred to as "phase structure (2)".

### Phase Structure of (3)

A phase structure has a continuous phase containing the polyamide resin and the modified elastomer, and a dispersed phase dispersed in the continuous phase and containing the polyolefin resin, but does not have a continuous phase containing the polyolefin resin and a dispersed phase dispersed in the continuous phase and containing the polyamide resin and the modified elastomer. That is, a phase structure is not a co-continuous phase structure but has a continuous phase containing a polyamide resin and a modified elastomer and a dispersed phase containing a polyolefin resin.

In the case of the phase structure (1), the continuous phase (A) contains a polyolefin resin. The polyolefin resin is preferably a main component of the continuous phase (A) (usually 70 mass% or more and may be 100 mass% with respect to the whole continuous phase A). Further, the dispersed phase (B) contains the polyamide resin and the modified elastomer. The polyamide resin and the modified elastomer are preferably a main component of the dispersed phase (B) (usually 70 mass% or more, and may be 100 mass% with respect to the whole dispersed phase B).

Furthermore, the dispersed phase (B) can have a continuous phase (B₁₁) in the dispersed phase (B) and a fine dispersed phase (B₁₂) dispersed in the continuous phase (B₁₁). Among them, the continuous phase (B₁₁) contains a polyamide resin. The polyamide resin is preferably a main component of the continuous phase (B₁₁) (usually 70 mass% or more and may be 100 mass% with respect to the whole continuous phase B₁₁). Also, the fine dispersed phase (B₁₂) contains a modified elastomer. The modified elastomer is preferably a main component of the fine dispersed phase (B₁₂) (usually 70 mass% or more and may be 100 mass% with respect to the entire fine dispersed phase B₁₂).

In the case of the phase structure (2), the continuous phase (A₁) contains a polyolefin resin. The polyolefin resin is preferably a main component of the continuous phase (A₁) (usually 70 mass% or more and may be 100 mass% with respect to the whole continuous phase A₁). The dispersed phase (B_{A1}) relative to the continuous phase (A₁) contains a polyamide resin and a modified elastomer. The polyamide resin and the modified elastomer are preferably a main component of the dispersed phase (B_{A1}) (70 mass% or more and may be 100 mass% with respect to the whole dispersed phase B_{A1}).

Furthermore, the dispersed phase (B_{A1}) may have a continuous phase (B_{A11}) in the dispersed phase (B_{A1}) and a fine dispersed phase (B_{A12}) dispersed in the continuous phase (B_{A11}), or does not have to have them. In the case of having this multiple-phase structure, the continuous phase (B_{A11}) contains a polyamide resin. The polyamide resin is preferably a main component of the continuous phase (B_{A11}) (usually 70 mass% or more and may be 100 mass% with respect to the whole continuous phase B_{A11}). The fine dispersed phase (B_{A12}) contains a modified elastomer. The modified elastomer is preferably a main component of the fine dispersed phase (B_{A12}) (usually 70 mass% or more and may be 100 mass% with respect to the whole fine dispersed phase BA₁₂).

Further, the continuous phase (A₂) contains a polyamide resin. The polyamide resin is preferably a main component of the continuous phase (A₂) (usually 70 mass% or more and may be 100 mass% with respect to the whole continuous phase A₂). Also, the dispersed phase (B_{A2}) relative to the continuous phase (A₂) contains a modified elastomer. The modified elastomer is preferably a main component of the dispersed phase (B_{A2}) (usually 70 mass% or more and may be 100 mass% with respect to the whole dispersed phase B_{A2}).

In the case of the phase structure (3), the continuous phase contains a polyamide resin and a modified elastomer. The polyamide resin and the modified elastomer are preferably a main component of the continuous phase (usually 70 mass% or more and may be 100 mass% with respect to the whole continuous phase). Also, the dispersed phase contains a polyolefin resin. The polyolefin resin is preferably a main component of the dispersed phase (usually 70 mass% or more and may be 100 mass% with respect to the whole dispersion phase).

Further, the dispersed phase can have a continuous phase in the dispersed phase (continuous phase in the dispersed phase) and a fine dispersed phase dispersed in the continuous phase (continuous phase in the dispersed phase). Among them, the continuous phase (continuous phase in the dispersed phase) contains a polyolefin resin. The polyolefin resin is preferably a main component of the continuous phase (continuous phase in the dispersed phase) (usually 70 mass% or more and may be 100 mass% with respect to the whole continuous phase). Also, the fine dispersed phase contains a polyamide resin. The polyamide resin is preferably a main component of the fine dispersed phase (usually 70 mass% or more and may be 100 mass% with respect to the whole fine dispersed phase). Further, the fine dispersed phase does not have to contain a modified elastomer, but may contain a modified elastomer together with the polyamide resin.

As described above, in the present thermoplastic resin composition, it can be thought that by using a polyamide resin having a short chain structure, excellent impact resistance can be obtained by using a polyolefin resin having a number average molecular weight of 350000 or more, even though the dispersion diameter of the dispersed phase is large. From such a viewpoint, it is preferred to have a continuous phase containing a polyolefin resin and a dispersed phase dispersed in the continuous phase and containing a polyamide resin and a modified elastomer. That is, it is preferred to exhibit the phase structure (1) or the phase structure (2). When having the phase structure (1) or the phase structure (2), a thermoplastic resin composition having higher impact resistance can be attained.

As described later, these phase structures (1) to (3) can be attained by melt-kneading a melt-kneaded product of a polyamide resin and a modified elastomer with a polyolefin resin.

In the present thermoplastic resin composition, the polyamide resin and the modified elastomer may be reacted. That is, a reactive group of a modified elastomer may be a reaction product (a reaction product of a polyamide resin and a modified elastomer) obtained by reacting with a polyamide resin. For example, in the phase structure (1), the above-mentioned reaction product can exist at the interface between the continuous phase (A) and the dispersed phase (B) and/or the interface between the continuous phase (B₁₁) and the fine dispersed phase (B₁₂). Similarly, in the phase structure (2), the above-mentioned reaction product can exist at the interface between the continuous phase (A₁) and the continuous phase (A₂), the interface between the continuous phase (A₁) and the dispersed phase (B_{A1}), the interface between the continuous phase (B_{A11}) and the fine dispersed phase (B_{A12}), and the like.

Various phase structures can be investigated by observation by a field-emission type scanning electron microscope (FE-SEM) on a treated surface of a test piece (a test piece made of the present thermoplastic resin composition) which was subjected to an oxygen plasma etching treatment and further subjected to an osmium coating treatment. In particular, the dispersed phase and the fine dispersed phase can be observed with images magnified 1000 times or more (usually 10000 times or less) in this method. In addition, components constituting each phase can be identified by performing energy dispersive X-ray analysis (EDS) at the time of observation using a field-emission type scanning electron microscope (FE-SEM).

The size of the dispersed phase of the present thermoplastic resin composition (the dispersed phase B dispersed in the continuous phase A in FIG. 1, the dispersed phase B_{A1} dispersed in the continuous phase A₁ in FIG. 2) is not particularly limited; however, the dispersion diameter (average dispersion diameter) is preferably 10000 nm or less, more preferably 50 nm or more and 8000 nm or less, and still more preferably 100 nm or more and 4000 nm or less.

The dispersion diameter of the dispersed phase can be measured in images magnified 1000 times or more obtained by using an electron microscope. That is, the longest diameter of each of the twenty dispersed phases randomly selected from a predetermined region in the image is measured, and the average value of the obtained longest diameters is taken as a first average value. Further, a further average value of the first average values measured in five different regions in the image is the average dispersion diameter (major-axis average dispersion diameter) of the dispersed phase.

The size of the fine dispersed phase contained in the dispersed phase of the present thermoplastic resin composition (the dispersed phase B dispersed in the continuous phase A in FIG. 1, the dispersed phase B_{A1} dispersed in the continuous phase A₁ in FIG. 2) (the fine dispersed phase B₁₂ contained in the dispersed phase B in FIG. 1, the fine dispersed phase B_{A12} contained in the dispersed phase B_{A1} in FIG. 2) is not particularly limited; however, the dispersion diameter (average dispersion diameter) is preferably 5 nm or more and 1000 nm or less, more preferably 5 nm or more and 600 nm or less, still more preferably 10 nm or more and 400 nm or less, and particularly preferably 15 nm or more and 350 nm or less.

The dispersion diameter of the fine dispersed phase can be measured in images magnified 1000 times or more obtained by using an electron microscope. That is, the longest diameter of each of the twenty fine dispersed phases randomly selected from a predetermined region in the image is measured, and the average value of the obtained longest diameters is taken as a first average value. Further, a further average value of the first average values measured in five different regions in the image is the average dispersion diameter (major-axis average dispersion diameter) of the fine dispersed phase.

### <3> Formulation

When in the present thermoplastic resin composition, the total of ratios of the polyolefin resin (polyolefin resin having a number average molecular weight of 350000 or more), the polyamide resin (polyamide resin having a short chain structure) and the modified elastomer is taken as 100 mass%, the ratio of the polyolefin resin can be 2 mass% or more and 90 mass% or less. This ratio is preferably from 5 mass% to 85 mass% inclusive, more preferably from 10 mass% to 83 mass% inclusive, further preferably from 15 mass% to 80 mass% inclusive, further preferably from 20 mass% to 78 mass% inclusive, further preferably from 25 mass% to 75 mass% inclusive, further preferably from 30 mass% to 73 mass% inclusive, and further preferably from 35 mass% to 70 mass%. Within the above range, it is possible to obtain a thermoplastic resin composition excellent in impact resistance characteristics and a molded body of the thermoplastic resin composition.

When in the present thermoplastic resin composition, the total of ratios of the polyolefin resin (polyolefin resin having a number average molecular weight of 350000 or more), the polyamide resin (polyamide resin having a short chain structure) and the modified elastomer is taken as 100 mass%, the ratio of the polyamide resin and the modified elastomer (some or all of them may be reacted with each other. The same applies below.) can be 10 mass% or more and 98 mass% or less. This ratio is preferably from 15 mass% to 95 mass% inclusive, more preferably from 17 mass% to 90 mass% inclusive, further preferably from 20 mass% to 85 mass% inclusive, further preferably from 22 mass% to 80 mass% inclusive, further preferably from 25 mass% to 75 mass% inclusive, further preferably from 27 mass% to 70 mass% inclusive, and further preferably from 30 mass% to 65 mass%. Within the above range, it is possible to obtain a thermoplastic resin composition excellent in impact resistance characteristics and a molded body of the thermoplastic resin composition.

When in the present thermoplastic resin composition, the total of ratios of the polyolefin resin (polyolefin resin having a number average molecular weight of 350000 or more), the polyamide resin (polyamide resin having a short chain structure) and the modified elastomer is taken as 100 mass%, the ratio of the polyamide resin can be 1 mass% or more and 75 mass% or less. The ratio is preferably from 15 mass% to 72 mass% inclusive, more preferably from 20 mass% to 70 mass% inclusive, further preferably from 22 mass% to 68 mass% inclusive, further preferably from 25 mass% to 65 mass% inclusive, further preferably from 27 mass% to 57 mass% inclusive, further preferably from 29 mass% to 53 mass% inclusive, and further preferably from 33 mass% to 49 mass%. Within the above range, it is possible to obtain a thermoplastic resin composition excellent in impact resistance characteristics and a molded body of the thermoplastic resin composition.

When in the present thermoplastic resin composition, the total of ratios of the polyolefin resin (polyolefin resin having a number average molecular weight of 350000 or more), the polyamide resin (polyamide resin having a short chain structure) and the modified elastomer is taken as 100 mass%, the ratio of the modified elastomer can be 1 mass% or more and 60 mass% or less. The ratio is preferably from 5 mass% to 53 mass% inclusive, more preferably from 11 mass% to 45 mass% inclusive, further preferably from 12 mass% to 40 mass% inclusive, further preferably from 13 mass% to 38 mass% inclusive, further preferably from 14 mass% to 36 mass% inclusive, further preferably from 15 mass% to 35 mass% inclusive, and further preferably from 18 mass% to 34 mass%. Within the above range, it is possible to obtain a thermoplastic resin composition excellent in impact resistance characteristics and a molded body of the thermoplastic resin composition.

When in the present thermoplastic resin composition, the total of ratios of the polyolefin resin (polyolefin resin having a number average molecular weight of 350000 or more) and the polyamide resin (polyamide resin having a short chain structure) is taken as 100 mass%, the ratio of the polyamide resin can be 1.5 mass% or more and 88 mass% or less. The ratio is preferably from 3 mass% to 75 mass% inclusive, more preferably from 5 mass% to 70 mass% inclusive, further preferably from 10 mass% to 65 mass% inclusive, further preferably from 15 mass% to 60 mass% inclusive, further preferably from 18 mass% to 55 mass% inclusive, further preferably from 20 mass% to 50 mass% inclusive, and further preferably from 25 mass% to 45 mass%. Within the above range, it is possible to obtain a thermoplastic resin composition excellent in impact resistance characteristics and a molded body of the thermoplastic resin composition.

Furthermore, when in the present thermoplastic resin composition, the total of ratios of the polyamide resin (polyamide resin having a short chain structure) and the modified elastomer is takes as 100 mass%, the ratio of the modified elastomer can be 20 mass% or more and 90 mass% or less. The ratio is preferably from 22 mass% to 88 mass% inclusive, more preferably from 25 mass% to 86 mass% inclusive, further preferably from 27 mass% to 75 mass% inclusive, further preferably from 29 mass% to 70 mass% inclusive, further preferably from 32 mass% to 66 mass% inclusive, and further preferably from 36 mass% to 60 mass%. Within the above range, it is possible to obtain a thermoplastic resin composition excellent in impact resistance characteristics and a molded body of the thermoplastic resin composition.

When the total of ratios of the above-mentioned polyolefin resin (polyolefin resin having a number average molecular weight of 350000 or more), the polyamide resin (polyamide resin having a short chain structure), and the modified elastomer is taken as 100 mass%, the ratio of the polyolefin resin is usually equal to the ratio of the continuous phase (A) when the entire phase is 100 mass% in the case of the above-mentioned phase structure (1) (see FIG. 1). On the other hand, in the case of the phase structure (2) (see FIG. 2), the ratio of the polyolefin resin is usually equal to the ratio of the continuous phase (A₁) when the entire phase is 100 mass%.

The ratio referred to here is the volume ratio, but it is also usually equal to the area ratio reflecting this volume ratio (same as above).

When the total of ratios of the above-mentioned polyolefin resin (polyolefin resin having a number average molecular weight of 350000 or more), the polyamide resin (polyamide resin having a short chain structure), and the modified elastomer is taken as 100 mass%, the ratio of the polyamide resin and the modified elastomer is usually equal to the ratio of the dispersed phase (B) when the entire phase is 100 mass% in the case of the above-mentioned phase structure (1) (see FIG. 1). On the other hand, in the case of the phase structure (2) (see FIG. 2), the ratio of the polyamide resin and the modified elastomer is usually equal to the total ratio of the dispersed phase (B_{A1}), the continuous phase (A₂) and the dispersed phase (B_{A2}) when the entire phase is 100 mass%.

When the total of ratios of the above-mentioned polyolefin resin (polyolefin resin having a number average molecular weight of 350000 or more), the polyamide resin (polyamide resin having a short chain structure), and the modified elastomer is taken as 100 mass%, the ratio of the polyamide resin is usually equal to the ratio of the continuous phase (B₁₁) when the entire phase is 100 mass% in the case of the above-mentioned phase structure (1) (see FIG. 1). On the other hand, in the case of the phase structure (2) (see FIG. 2), the ratio of the polyamide resin is usually equal to the total ratio of the continuous phase (A₂) and the continuous phase (B_{A11}) in the dispersed phase when the entire phase is 100 mass%.

When the total of ratios of the above-mentioned polyolefin resin (polyolefin resin having a number average molecular weight of 350000 or more), the polyamide resin (polyamide resin having a short chain structure), and the modified elastomer is taken as 100 mass%, the ratio of the modified elastomer is usually equal to the ratio of the fine dispersed phase (B₁₂) when the entire phase is 100 mass% in the case of the above-mentioned phase structure (1) (see FIG. 1). On the other hand, in the case of the phase structure (2) (see FIG. 2), the ratio of the modified elastomer is usually equal to the total ratio of the fine dispersed phase (B_{A12}) and the dispersed phase (B_{A2}) when the entire phase is 100 mass%.

When the total of ratios of the above-mentioned polyolefin resin (polyolefin resin having a number average molecular weight of 350000 or more) and the polyamide resin (polyamide resin having a short chain structure) is taken as 100 mass%, the ratio of the polyamide resin is usually equal to the ratio of the continuous phase (B₁₁) when the entire phase is 100 mass% in the case of the above-mentioned phase structure (1) (see FIG. 1). On the other hand, in the case of the phase structure (2) (see FIG. 2), the ratio of the polyamide resin is usually equal to the total ratio of the continuous phase (A₂), the dispersed phase (B_{A1}) not having the fine dispersed phase (B_{A12}), and the continuous phase (B_{A11}) in the dispersed phase of the dispersed phase (B_{A1}) having the fine dispersed phase (B_{A12}) when the entire phase is 100 mass%.

When the total of ratios of the above-mentioned polyamide resin (polyamide resin having a short chain structure) and the modified elastomer is taken as 100 mass%, the ratio of the modified elastomer is usually equal to the ratio of the fine dispersed phase (B₁₂) when the entire phase is 100 mass% in the case of the above-mentioned phase structure (1) (see FIG. 1). On the other hand, in the case of the phase structure (2) (see FIG. 2), the ratio of the modified elastomer is usually equal to the total ratio of the dispersed phase (B_{A2}) and the fine dispersed phase (B_{A12}) when the entire phase is 100 mass%.

According to the present thermoplastic resin composition, a high impact resistance can be attained by using a polyamide resin having a short chain structure. Specifically, the Charpy impact strength can be 50 kJ/m² or more and 150 kJ/m² or less, further can be 53 kJ/m² or more and 140 kJ/m² or less, further can be 56 kJ/m² or more and 135 kJ/m² or less, further 59 kJ/m² or more and 130 kJ/m² or less, and further can be set to 62 kJ/m² or more and 125 kJ/m² or less.

### [2] Molded Body

The molded body of the present invention is composed of the present thermoplastic resin composition. The present thermoplastic resin composition is as described above. The present molded body may be a solid molded body or a foamed molded body. The present molded body may be formed by any method, and the method is not particularly limited. For example, the thermoplastic resin can be subjected to injection molding, extrusion molding (sheet extrusion, profile extrusion), T-die molding, blow molding, injection blow molding, inflation molding, hollow molding, vacuum molding, compression molding, press molding, stamping molding, transfer molding, or the like. These may be used singly, or may be used in combination of two or more thereof.

In addition, the shape and the dimensions, such as size and thickness, of the molded body are not particularly limited, and the application of the molded body is not particularly limited. The molded body can be used as, for example, exterior materials, interior materials, structural materials, impact absorbing materials for automobiles, railway vehicles, marine vessels, airplanes, or the like. Among them, examples of automobile supplies include exterior materials for automobiles, interior materials for automobiles, structural materials for automobiles, shock absorbers for automobiles, components in engine rooms, and the like. Specific examples of automobile supplies includes bumper, spoiler, cowling, front grille, garnish, hood, cargo room lid, cowl louver, fender panel, rocker molding, door panel, roof panel, instrument panel, center cluster, door trim, quarter trim, roof lining, pillar garnish, deck trim, tonneau board, package tray, dashboard, console box, kicking plate, switch base, seat back board, seat frame, arm rest, sun visor, intake manifold, engine head cover, engine under cover, oil filter housing, housing for on-vehicle electronic component (ECU, TV monitor, etc.), air filter box, and the like.

Further, examples of the application of the molded body include interior materials, exterior materials, and structural materials for buildings or furniture. That is, the molded body can be a door covering material, a door structural material, a covering material of various types of furniture (desk, chair, shelf, chest of drawers, etc.), structural material, and the like. In addition, the molded body can be used as a packaging body, an accommodating body (tray etc.), a protecting member, a partition member, and the like. Further, the molded body can be a molded body such as housings and structures for household electric appliances (slim-type TV, refrigerator, washing machine, vacuum cleaner, mobile phone, portable game machine, note type personal computer, etc.).

### [3] Method for Producing Thermoplastic Resin Composition

The present production method is a method for producing the above-mentioned thermoplastic resin composition, the method comprising:
a melt-kneading step of melt-kneading a melt-kneaded product of the polyamide resin (polyamide resin having a short chain structure) and the modified elastomer (modified elastomer having a group reactive with the polyamide resin) with the polyolefin resin (polyolefin resin having a number average molecular weight of 350000 or more).

Here, the properties and composition of the polyolefin resin, polyamide resin, and modified elastomer are as described above.

The melt-kneading step (hereinafter simply referred to as "second melt-kneading step") is a step of melt-kneading, a melt-kneaded product of a polyamide resin (polyamide resin having a short chain structure) and a modified elastomer (modified elastomer having a group reactive with the polyamide resin) with a polyolefin resin (polyolefin resin having a number average molecular weight of 350000 or more).

The melt-kneaded product used in this case may be a composition in a molten state or a composition in a softened state, or may be solidified by pelletization or the like.

In the second melt-kneading step, any melt-kneading apparatus may be used. For example, it is possible to use an extruder (single screw extruder, twin screw kneading extruder, etc.), a kneader, a mixer (high speed flow mixer, paddle mixer, ribbon mixer, etc.) and the like. These apparatuses may be used singly, or may be used in combination of two or more thereof. In addition, when two or more types of apparatuses are used, they may be operated continuously or batchwise. Furthermore, the raw materials may be mixed all at once, or may be mixed by adding and charging in plural separate parts (multistage compounding).

A kneading temperature in the second melt-kneading step is not particularly limited; however, it is preferably 190°C or higher and 350°C or lower, more preferably 200°C or higher and 300°C or lower, and still more preferably 205°C or higher and 260°C or lower.

The above-mentioned melt-kneaded product is a composition obtained by melt-kneading in advance a polyamide resin (polyamide resin having a short chain structure) and a modified elastomer (modified elastomer having a group reactive with a polyamide resin). Hereinafter, the step of melt-kneading the polyamide resin and the modified elastomer in advance is referred to as a first melt-kneading step.

In this first melt-kneading step, any melt-kneading apparatus may be used. Various apparatuses exemplified in the above description of the second melt-kneading step can be used, and these apparatuses may be used singly or in combination of two or more thereof. In the first melt-kneading step and the second melt-kneading step, the same apparatus may be used or a different apparatus may be used.

In addition, when two or more types of apparatuses are used, they may be operated continuously or batchwise. Furthermore, the raw materials may be mixed all at once, or may be mixed by adding and charging in plural separate parts (multistage compounding).

Further, a kneading temperature in the first melt-kneading is preferably 190°C or higher and 350°C or lower, more preferably 200°C or higher and 330°C or lower, and still more preferably 205°C or higher and 310°C or lower.

In the present production method, kneading is carried out when the polyamide resin and the modified elastomer react with each other by using a melt-kneaded product which has been melt-kneaded in advance (a melt-kneaded product of a polyamide resin and a modified elastomer). Therefore, due to the modified elastomer having a reactive group, it is considered that reactive groups are added to the surface of the polyamide resin and polyamide resin particles in which the modified elastomer reactant is bound to the surface are formed. By further kneading, the polyamide resin particles to which the modified elastomer reactant is bonded at their surfaces are sheared, and the unreacted polyamide resin appears on the sheared surface. Then, it is thought that unreacted modified elastomer reacts further with the unreacted polyamide resin. In this manner, the polyamide resin particles to which the modified elastomer reactant is bonded are sheared, the unreacted polyamide resin appears on the sheared surface, and the unreacted modified elastomer reacts with the unreacted polyamide resin. By repeating this process, it is considered that the smaller polyamide resin particles bonded to the modified elastomer reactant can be stably formed without relying on a high share.

Further, it is considered that when the amount of the modified elastomer that can be supplied in the above process is small, it is difficult for the polyamide resin particles to which the modified elastomer reactant is bonded to become small, and when the amount of the modified elastomer that can be supplied is sufficiently large, it is easy for the polyamide resin particles to which the modified elastomer reactant is bonded to become small.

### EXAMPLES

Hereinafter, the present invention will be specifically described by way of examples.

### [1] Preparation of Thermoplastic Resin Composition and Preparation of Test Piece

(1) Preparation of Thermoplastic resin composition
   Pellets of the following polyamide resins (PAs 1 to 2) and pellets of the following modified elastomer were dry-blended and then charged into a twin-screw melt kneading extruder (manufactured by Coperion GmbH, screw diameter 50 mm, L/D = 48), kneaded (first melt-kneading step) under the conditions of a kneading temperature of 210°C, an extrusion rate of 150 kg/hour, and a screw rotation speed of 500 rpm, to obtain pellets made of a melt-kneaded product of a polyamide resin and a modified elastomer through a pelletizer.
(2) Preparation of Molded Body for Evaluation
   The pellets obtained in the above (1) and pellets of the following polyolefin resins (POs 1 to 4) were dry-blended and then charged into a twin-screw melt kneading extruder (manufactured by Coperion GmbH, screw diameter 50 mm, L/D = 48), kneaded under the conditions of a kneading temperature of 210°C, an extrusion rate of 150 kg/hour, and a screw rotation speed of 500 rpm, to obtain pellets made of a thermoplastic resin composition through a pelletizer.
   - Polyolefin Resin (PO1): Polypropylene resin, homopolymer, number average molecular weight 520000, MFR 3 g/10 min
   - Polyolefin resin (PO2): Polypropylene resin, homopolymer, number average molecular weight 312000, MFR 21 g/10 min
   - Polyolefin resin (PO3): Polypropylene resin, homopolymer, number average molecular weight 172000, MFR 17 g/10 min
   - Polyolefin resin (PO4): Polypropylene resin, homopolymer, number average molecular weight 20000, MFR 1200 g/10 min
   - Polyamide resin (PA1): Nylon 6 resin (polyamide resin having only a short chain structure), number average molecular weight 18000
   - Polyamide resin (PA2): Nylon 11 resin (polyamide resin not having a short chain structure), manufactured by Arkema Co., Ltd., product name "Rilsan BMN O", weight average molecular weight 18000, melting point 190°C.
   · Modified elastomer: Maleic anhydride-modified ethylene-butene copolymer (modified EBR), product name "TAFMER MH 7020" manufactured by Mitsui Chemicals, Inc., MFR (230°C) = 1.5 g/10 min
(3) The pellet obtained in above (2) was charged into an injection molding machine (40 ton injection molding machine manufactured by Nissei Plastic Industrial Co., Ltd.) and a test piece for a property measurement was injection molded under injection conditions of a set temperature of 210°C and a mold temperature of 40°C.
(4) According to the above procedure, thermoplastic resin compositions of Experiment Examples 1 to 4 and 6 to 9 were prepared in which when the total of ratios of the polyolefin resin, the polyamide resin, and the modified elastomer is taken as 100 mass%, compounding ratios of the polyolefin resin, the polyamide resin, and the modified elastomer were 55 mass%, 25 mass%, and 20 mass%, respectively, to obtain test pieces for a property measurement formed from the resulting thermoplastic resin composition (see Table 1).

Further, according to the same procedure, thermoplastic resin composition of Experiment Example 5 was prepared in which when the total of ratios of the polyolefin resin, the polyamide resin, and the modified elastomer is taken as 100 mass%, compounding ratios of the polyolefin resin, the polyamide resin, and the modified elastomer were 32.5 mass%, 42.5 mass%, and 25 mass%, respectively, to obtain a test piece for a property measurement formed from the resulting thermoplastic resin composition (see Table 1).

### [2] Evaluation of Molded Body for Evaluation

### (1) Measurement of Charpy Impact Strength

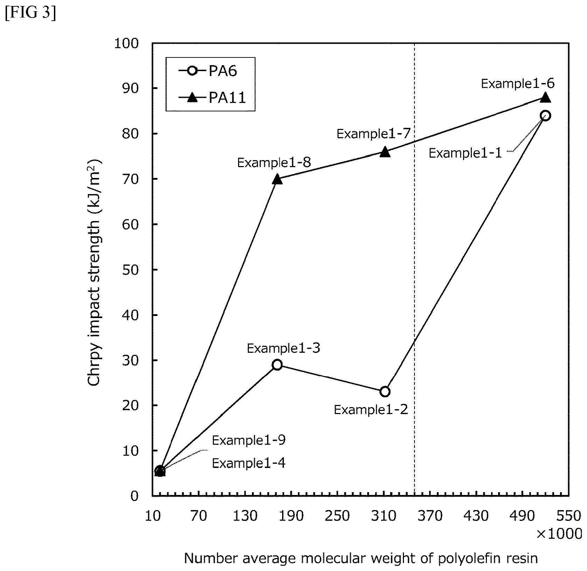

Charpy impact strength was measured according to JIS K 7111-1 by using each of the test pieces for evaluation of Experiment Examples 1 to 9 obtained in the above [1]. The results are shown in Table 1. In the measurement of Charpy impact strength, a test piece having a notch (type A) was used and the impact was measured by the edgewise test method at a temperature of 23 °C. Further, the correlation between the number average molecular weight of the polyolefin resin and the Charpy impact strength is shown in FIG. 3.

In FIG. 3, the numerical value on the abscissa represents the numerical value of the upper three digits of the number average molecular weight of the polyolefin resin, and in fact, it is a value multiplied by 1000.

### (2) Observation of Morphology

The fracture surface of each test piece subjected to the Charpy impact strength measurement of the above (1) is subjected to oxygen plasma etching treatment at 100 W for 1 minute, followed by osmium coating treatment, and is observed with the field-emission type scanning electron microscope ("JSM-7100F TTL LV" manufactured by JEOL Ltd.) to obtain an image (FE-SEM image). In addition, the components constituting each phase are specified by performing energy dispersive X-ray analysis (EDS) at the time of the above FE-SEM observation. From these results, the phase structure is specified. As a result, the phase structures of Experiment Examples 1 to 4 and Experiment Examples 6 to 9 are phase structure (1).

### [Table 1]

**Table 1**

| | | Example | | | | | | | | |
|---|---|---|---|---|---|---|---|---|---|---|
| | | 1 | 2 | 3 | 4 | 5 | 6 | 7 | 8 | 9 |
| Polypropylene (Homopolymaer) | Mn=520,000 | 55 | - | - | - | 32.5 | 55 | - | - | - |
| | Mn=312,000 | - | 55 | - | - | - | - | 55 | - | - |
| | Mn= 172,000 | - | - | 55 | - | - | - | - | 55 | - |
| | Mn=20,000 | - | - | - | 55 | - | - | - | - | 55 |
| Polyamide | PA6 | 25 | | | | 42.5 | - | | | |
| | PA11 | - | | | | - | 25 | | | |
| Mod ified Elastomer | Maleic Anhydride Modified EBR | 20 | | | | 25 | 20 | | | |
| Charpy impact strength (kJ/m²) | | 84 | 23 | 29 | 5.5 | 113 | 88 | 76 | 70 | 5.6 |

### [3] Effect of Examples

From Table 1 and FIG. 3, Charpy impact strength of Experiment Example 6 employing PA11 as the polyamide resin, and employing polypropylene having a number average molecular weight of 520000 as the polyolefin resin is improved by 25.7% relative to Experiment Example 8 employing PA11 as the polyamide resin, and employing polypropylene having a number average molecular weight of 172000 as the polyolefin resin.

On the other hand, Charpy impact strength of Experiment Example 1 employing PA6 as the polyamide resin, and employing polypropylene having a number average molecular weight of 520000 as the polyolefin resin is extremely remarkably improved by an extent as unpredictable as 189.7% relative to Experiment Example 3 employing PA6 as the polyamide resin, and employing polypropylene having a number average molecular weight of 172000 as the polyolefin resin.

As compared with the case where PA11 is employed as the polyamide resin, the Charpy impact strength in the case where PA6 is employed was generally thought to be inferior. However, it was shown that compared with Experiment Example 8 in which PA11 was employed as the polyamide resin and polypropylene having a number average molecular weight of 172000 was employed as the polyolefin resin, even when PA6 is employed as the polyamide resin, Charpy impact strength exceeding the Charpy impact strength in Experiment Example 8 can be attained by employing a polyolefin resin having a number average molecular weight of 520000 (Experiment Example 1).

That is, it is understood that, in the polyamide resin having a short chain structure excellent in versatility, it is possible to obtain a drastic improvement in impact strength by employing a higher molecular weight polyolefin resin.

The above-mentioned examples are for illustrative purposes only and are not to be construed as limiting the invention. While the invention has been described by way of examples of typical embodiments, it is understood that the language used in the description and illustration of the present invention is to be regarded as explanatory and illustrative and not restrictive. Modifications within the scope of the appended claims are possible without departing from the scope or spirit of the invention in its form as detailed herein. Although reference has been made herein to specific structures, materials and examples in the detailed description of the present invention, it is not intended to limit the invention to the disclosure set forth herein, but rather, to cover all functionally equivalent structures, methods, and uses within the scope of appended claims.

### REFERENCE SIGNS LIST

- A;: Continuous phase
- B;: Dispersed phase
- B₁₁;: Continuous phase (continuous phase within a dispersed phase B)
- B₁₂;: Fine dispersed phase (dispersed phase within a dispersed phase B)
- A₁, A₂;: Continuous phase
- B_{A1}, B_{A2};: Dispersed phase
- B_{A11};: Continuous phase (continuous phase within a dispersed phase B_{A1})
- B_{A12};: Fine dispersed phase (dispersed phase within a dispersed phase B_{A1})

## Claims

1. A thermoplastic resin composition containing a polyolefin resin, a polyamide resin, and a modified elastomer having a group reactive with the polyamide resin,
wherein
the polyolefin resin has a number average molecular weight of 350,000 or more, and
the polyamide resin has a structure in which a carbon number of a linear-chain part of hydrocarbon group sandwiched between adjacent amide bonds in a main chain is 5 or less; and
wherein the thermoplastic resin composition comprises:
a continuous phase (A) containing the polyolefin resin, and
a dispersed phase (B) dispersed in the continuous phase (A) and containing the polyamide resin and the modified elastomer.

2. The thermoplastic resin composition according to claim 1, wherein the dispersed phase (B) has a continuous phase (B₁₁) containing the polyamide resin, and a fine dispersed phase (B₁₂) dispersed in the continuous phase (B₁₁) and containing the modified elastomer.

3. The thermoplastic resin composition according to claim 1 or 2, wherein the polyolefin resin is a homopolymer.

4. The thermoplastic resin composition according to any one of claims 1 to 3, wherein the polyamide resin is selected from the group consisting of nylon 6, nylon 66, nylon 46, nylon 6T, nylon 61, nylon M5T, nylon M5I, and copolymers thereof.

5. The thermoplastic resin composition according to any one of claims 1 to 4, wherein the modified elastomer is an olefin-based thermoplastic elastomer having a skeleton of a copolymer of ethylene or propylene and an α-olefin having 3 to 8 carbon atoms, or a styrene-based thermoplastic elastomer having a styrene skeleton.

6. A molded body, wherein the molded body is composed of the thermoplastic resin composition according to any one of claims 1 to 5.

7. A method for producing the thermoplastic resin composition according to claim 1, the method comprising:
a melt-kneading step of melt-kneading a melt-kneaded product of the polyamide resin and the modified elastomer with the polyolefin resin.

## Patentansprüche

1. Thermoplastische Harzzusammensetzung, enthaltend ein Polyolefinharz, ein Polyamidharz und ein modifiziertes Elastomer mit einer mit dem Polyamidharz reaktiven Gruppe,
wobei
das Polyolefinharz ein Molekulargewicht-Zahlenmittel von 350 000 oder mehr aufweist und
das Polyamidharz eine Struktur aufweist, bei der eine Kohlenstoffanzahl eines geradkettigen Teils einer Kohlenwasserstoffgruppe, die zwischen benachbarten Amidbindungen in einer Hauptkette angeordnet ist, 5 oder weniger beträgt; und
wobei die thermoplastische Harzzusammensetzung umfasst:
eine kontinuierliche Phase (A), die das Polyolefinharz enthält, und
eine dispergierte Phase (B), die in der kontinuierlichen Phase (A) dispergiert ist und die das Polyamidharz und das modifizierte Elastomer enthält.

2. Thermoplastische Harzzusammensetzung nach Anspruch 1, wobei die dispergierte Phase (B) eine kontinuierliche Phase (B₁₁), die das Polyamidharz enthält, und eine fein dispergierte Phase (B₁₂), die in der kontinuierlichen Phase (B₁₁) dispergiert ist und das modifizierte Elastomer enthält, aufweist.

3. Die thermoplastische Harzzusammensetzung nach Anspruch 1 oder 2, wobei das Polyolefinharz ein Homopolymer ist.

4. Thermoplastische Harzzusammensetzung nach einem der Ansprüche 1 bis 3, wobei das Polyamidharz ausgewählt ist aus der Gruppe bestehend aus Nylon 6, Nylon 66, Nylon 46, Nylon 6T, Nylon 61, Nylon M5T, Nylon M5I und Copolymeren davon.

5. Thermoplastische Harzzusammensetzung nach einem der Ansprüche 1 bis 4, wobei das modifizierte Elastomer ein Olefin-basiertes thermoplastisches Elastomer mit einem Gerüst aus einem Copolymer aus Ethylen oder Propylen und einem α-Olefin mit 3 bis 8 Kohlenstoffatomen oder ein Styrol-basiertes thermoplastisches Elastomer mit einem Styrolgerüst ist.

6. Formkörper, wobei der Formkörper aus der thermoplastischen Harzzusammensetzung nach einem der Ansprüche 1 bis 5 aufgebaut ist.

7. Verfahren zur Herstellung der thermoplastischen Harzzusammensetzung nach Anspruch 1, wobei das Verfahren umfasst:
einen Schmelzknetschritt des Schmelzknetens eines schmelzgekneteten Produkts aus dem Polyamidharz und dem modifizierten Elastomer mit dem Polyolefinharz.

## Revendications

1. Composition de résine thermoplastique contenant une résine de polyoléfine, une résine de polyamide, et un élastomère modifié ayant un groupe réactif avec la résine de polyamide,
dans laquelle
la résine de polyoléfine a un poids moléculaire moyen en nombre de 350 000 ou plus, et
la résine de polyamide a une structure dans laquelle un nombre de carbone d'une partie de chaîne linéaire du groupe hydrocarboné pris en sandwich entre des liaisons amide adjacentes dans une chaîne principale est de 5 ou moins ; et
dans laquelle la composition de résine thermoplastique comprend :
une phase continue (A) contenant la résine de polyoléfine, et
une phase dispersée (B) dispersée dans la phase continue (A) et contenant la résine de polyamide et l'élastomère modifié.

2. Composition de résine thermoplastique selon la revendication 1, dans laquelle la phase dispersée (B) a une phase continue (B₁₁) contenant la résine de polyamide, et une fine phase dispersée (B₁₂) dispersée dans la phase continue (B₁₁) et contenant l'élastomère modifié.

3. Composition de résine thermoplastique selon la revendication 1 ou 2, dans laquelle la résine de polyoléfine est un homopolymère.

4. Composition de résine thermoplastique selon l'une quelconque des revendications 1 à 3, dans laquelle la résine de polyamide est choisie dans le groupe consistant en nylon 6, nylon 66, nylon 46, nylon 6T, nylon 61, nylon M5T, nylon M5I, et des copolymères de ceux-ci.

5. Composition de résine thermoplastique selon l'une quelconque des revendications 1 à 4, dans laquelle l'élastomère modifié est un élastomère thermoplastique à base d'oléfine ayant un squelette d'un copolymère d'éthylène ou de propylène et une α-oléfine ayant 3 à 8 atomes de carbone, ou un élastomère thermoplastique à base de styrène ayant un squelette de styrène.

6. Corps moulé, où ledit corps moulé est composé de la composition de résine thermoplastique selon l'une quelconque des revendications 1 à 5.

7. Procédé de production de la composition de résine thermoplastique selon la revendication 1, ledit procédé comprenant :
une étape de pétrissage à l'état fondu pour pétrir à l'état fondu un produit pétri à l'état fondu de la résine de polyamide et de l'élastomère modifié avec la résine de polyoléfine.
